Europäisches Patentamt

European Patent Office    (11) Publication number: **0 386 948**

Office européen des brevets    **A1**

## EUROPEAN PATENT APPLICATION

(21) Application number: 90302215.0    (51) Int. Cl.⁵: **B23K 3/03**

(22) Date of filing: 01.03.90

(30) Priority: 09.03.89 IE 760/89
03.11.89 IE 3540/89

(43) Date of publication of application:
**12.09.90 Bulletin 90/37**

(84) Designated Contracting States:
**AT BE CH DE DK ES FR GB GR IT LI LU NL SE**

(71) Applicant: OGLESBY & BUTLER, RESEARCH &
DEVELOPMENT LIMITED
8 Clanwilliam Square, Grand Canal Quay
Dublin 2(IE)

(72) Inventor: Oglesby, Alfred Peter
8 Bessfield, Athy Road
Carlow(IE)
Inventor: Oglesby, John Paul
Anneville
Shrule, Carlow(IE)
Inventor: Brett, Damian
Ashfinto
Crossneen, Carlow(IE)
Inventor: Trickey, Ronald Henry
39 Tekels Avenue
Camberly, Surrey, GU15 2LB(GB)
Inventor: Watmore, John Philip
Annamult Road
Bennettsbridge, County Kilkenny(IE)

(74) Representative: Bridge-Butler, Alan James et
al
G.F. REDFERN & CO. High Holborn House
52/54 High Holborn
London WC1V 6RL(GB)

(54) A soldering head for a soldering or desoldering iron.

(57) A soldering head (3) for a soldering iron comprises a main body member (6) terminating in a solder working tip portion (8). A tubular member (17) extends from the main body member (6) and terminates in a plug member (19) for engaging a handle. A heating element (30) is wound on a ceramic core (33) extending into a cylindrical housing (14) of the main body member (6). A thermocouple joint (26) mounted in a sleeve (27) is mounted in a bore (22) of the main body member (6) for sensing the temperature of the main body member (6) and in turn the soldering tip (8).

Fig. 3

EP 0 386 948 A1

The present invention relates to a soldering head for a soldering or desoldering iron, the soldering head being of the type comprising a main body member of heat conductive material having a front end and a rear end, the front end forming a solder working tip portion, and the invention also relates to a soldering or desoldering iron comprising the soldering head.

In general, soldering irons and desoldering irons comprise a handle and a soldering head. The soldering head generally comprises an elongated hollow shaft extending from the handle and normally secured to the handle by screws or other suitable fastening means. A heating element is provided generally in the shaft, and where the heating element is electrically powered, the heating element normally comprises a coil of suitable heating element wire. A solder working tip portion, normally referred to as the soldering tip, is formed by portion of a solid body member of heat conductive material which normally extends from the shaft. Portion of the solid body member in general extends into the core of the heating element for conducting heat from the heating element.

It is important that the temperature of the soldering tip of such soldering or desoldering heads should be maintained within a relatively narrow range during normal working conditions. For example, when the soldering tip is brought into engagement with a workpiece which acts as a heat sink, it is important that the temperature of the soldering tip should not fall below a certain predetermined lower limit, and should recover rapidly from the lower limit. Attempts to achieve this in known soldering irons fall into two broad categories. Firstly, the solid body member which forms the soldering tip is constructed to have a relatively large mass, thus giving it a relatively large heat mass, or secondly a temperature sensor is provided. The former solution is only partly successful. Where a soldering iron with a body member of relatively large mass is used with a workpiece which does not act as a substantial heat sink the soldering iron may perform adequately. However, where the workpiece forms a significant heat sink, then unless the mass of the main body member is exceedingly large, it is impossible to maintain the temperature of the tip above a satisfactory lower limit. Furthermore, where the mass of the body member is relatively large, the recovery rate, namely, the time taken for the soldering tip to recover to a normal working temperature after the temperature of the tip has fallen to the predetermined lower limit, is unacceptable. Furthermore, providing a body member with a relatively large mass in the soldering head introduces a significant disadvantage in that the soldering iron becomes relatively cumbersome, unbalanced and difficult to work with.

In general, it has been found that attempts to solve the problem by using temperature sensors have also been not entirely successful. In general, the type of temperature sensors used are either heat sensitive resistance wire type sensors which are normally mounted adjacent the heating element, or alternatively, the resistance of the actual heating element is monitored which gives an indication of temperature of the heating element. The temperature sensor through suitable control circuitry controls power to the heating element and on the sensor sensing the temperature having fallen below the predetermined lower limit, power is delivered to the heating element. While such temperature sensing arrangements do provide for recovery of the soldering tip temperature, in general, the response time is unacceptably slow. On the soldering tip temperature falling as a result of being brought into engagement with a workpiece which acts as a heat sink, the temperature of the body member similarly commences to fall. This, in due course, causes the temperature of the heating element to fall. However, in known soldering irons, by the time the temperature fall in the heating element has been sensed, the soldering tip may have dropped below an acceptable soldering temperature. Even where the soldering tip temperature remains within the low end of the temperature range, the response time to return the temperature of the soldering tip to its normal temperature tends to be too slow and further use of the soldering iron may cause the soldering tip temperature to fall below an acceptable soldering temperature.

There is therefore a need for a soldering head for a soldering or desoldering iron which overcomes these problems.

The present invention is directed towards providing such a soldering head and a soldering or desoldering iron.

The invention overcomes the problem of soldering heads known heretofore by virtue of the fact that the soldering head comprising a main body member of heat conductive material having a front end and a rear end, the front end forming a soldering tip portion and a temperature sensing means is mounted within the main body member.

The advantages of the invention are many. By virtue of the fact that the temperature sensing means is mounted within the main body member, the temperature of the main body member, and in turn the solder working tip portion can be maintained within a relatively narrow range. Furthermore, by virtue of the fact that the temperature sensing means directly senses the temperature of the main body member, the recovery time for the main body member and in turn the solder working tip portion to return to its normal working temperature on the soldering tip being brought into engagement with a workpiece which acts as a heat sink is relatively short. This is by virtue of the fact that the temperature sensing means immediately detects a fall in temperature of the main body member and on detecting such a fall in temperature power can immediately be delivered to the heating element. A further advantage of the invention is that by virtue of the fact that the temperature sensing means is mounted within the main body member, a main body member of relatively low heat mass, and accordingly of relatively low mass and size can be provided. Thus, this has the further added advantage that a soldering head which is relatively light and compact may be provided. This further permits the soldering head to be relatively short, and accordingly the solder working tip portion can be arranged relatively close to the handle which when the soldering head is mounted in a soldering iron provides a soldering iron which is relatively easy to use.

In one embodiment of the invention, the temperature sensing means is located in a bore extending into the main body member.

The advantage of this feature of the invention is that it provides relatively accurate sensing of the temperature of the main body member and in turn the solder working tip portion, and further it shields the temperature sensing means from the effects of radiated heat from a heating element or the like.

Preferably, the main body member is an elongated body member extending between the front end and the rear end, and defining a central axis, the bore extending into the body member from the rear end along the central axis, and the temperature sensing means being a tight fit in the bore for heat conduction from the body member to the temperature sensing means.

The advantage of this feature of the invention is that the temperature sensed by the temperature sensing means relatively accurately reflects the temperature of the solder working tip portion. This is by virtue of the fact that very little, if any, temperature drop occurs between the solder working tip portion and the temperature sensing means due to the fact that the temperature sensing means is a tight fit in the bore.

In one aspect of the invention, the temperature sensing means comprises a thermocouple formed by a pair of wires joined to form a thermocouple joint, the thermocouple joint being disposed adjacent the inner end of the bore.

The advantage of this feature of the invention is that a relatively accurate reading of temperature is achieved and changes in temperature in the main body member are relatively quickly detected and determined.

In another embodiment of the invention, a sleeve of heat conductive material is provided around the thermocouple, the thermocouple joint being braised to the sleeve and the sleeve being a tight fit in the bore of the body member.

The advantage of this feature of the invention is that it provides a relatively compact arrangement of temperature sensing means and also facilitates assembly and construction of the soldering head.

In another aspect of the invention, an elongated hollow housing extends from the main body member, the housing defining an interior region and heating means are mounted in the interior region of the housing.

The advantage of this feature of the invention is that it provides a relatively simple construction of soldering head, and furthermore, facilitates in the transfer of heat from the heating means into the main body member.

Preferably, the hollow housing extends axially rearwardly from the main body member.

The advantage of this feature of the invention is that it provides a particularly advantageous construction of device.

In a further aspect of the invention, the heating means comprises an electrically powered heating element wound on a core member mounted in the housing, the cross sectional area of the heating element being just less than the cross sectional area of the interior region of the housing.

The advantage of this feature of the invention is that is provides a relatively efficient construction of soldering head.

In another embodiment of the invention, an elongated tubular member extends rearwardly from the housing for connecting the soldering head to a handle of a soldering or desoldering iron, the tubular member terminating in a quick release connecting means for engaging a complementary quick release connecting means in the handle, the quick release connecting means carrying electrical contacts for engaging corresponding electrical contacts in the complementary quick release connecting means.

The advantage of this feature of the invention is that is provides a soldering head which can readily easily be connected to the handle of a soldering iron, and in general avoids the need for a skilled operative to replace a soldering head in a handle of a soldering iron.

Additionally, the invention provides a soldering or desoldering iron comprising a handle and a soldering head connected to the handle, wherein the soldering head is a soldering head according to the invention, and the handle is provided with a complementary quick release connecting means for engaging the quick release connecting means of the soldering head.

The advantage of this feature of the invention is that the soldering iron or desoldering iron contains all the advantages of the soldering head just discussed and furthermore, a soldering iron or desoldering iron may be provided with a plurality of soldering heads comprising solder working tip portions of different shape and construction and also soldering heads of different heat outputs, and the soldering heads can readily easily be mounted and replaced in the handle.

The invention will be more clearly understood from the following description of a preferred embodiment thereof, given by way of example only, with reference to the accompanying drawings, in which:

Fig. 1 is a perspective view of a soldering iron according to the invention,

Fig. 2 is a perspective view of a soldering head also according to the invention for use in the soldering iron of Fig. 1,

Fig. 3 is a partly cross sectional view of the soldering head of Fig. 2,

Fig. 4 is an end view of the soldering head of Fig. 2,

Fig. 5 is a cross sectional view of portion of the soldering head of Fig. 2,

Fig. 6 is a perspective view of a detail of the soldering head of Fig. 2,

Fig. 7 is a cross sectional view of the detail of Fig. 6 of the soldering head of Fig. 2,

Fig. 8 is a cross sectional view of portion of the soldering head of Fig. 2 on the line VIII-VIII of Fig. 4,

Fig. 9 is a cut-away perspective view of the soldering iron of Fig. 1,

Fig. 10 is a cross sectional view of portion of the soldering iron of Fig. 1,

Fig. 11 is a perspective view of a detail of portion of the soldering iron of Fig. 1,

Fig. 12 is a perspective view of another detail of the soldering iron of Fig. 1, and

Fig. 13 is a sectional view of the detail of Fig. 12.

Referring to the drawings, there is illustrated a soldering iron according to the invention indicated generally by the reference numeral 1. The soldering iron comprises a handle 2 of injection moulded plastics material and a soldering head also according to the invention indicated generally by the reference numeral 3. The soldering head 3 is releasably connected to the handle 2 as will be described below. Before describing the handle 2 in detail, the soldering head 3 will first be described.

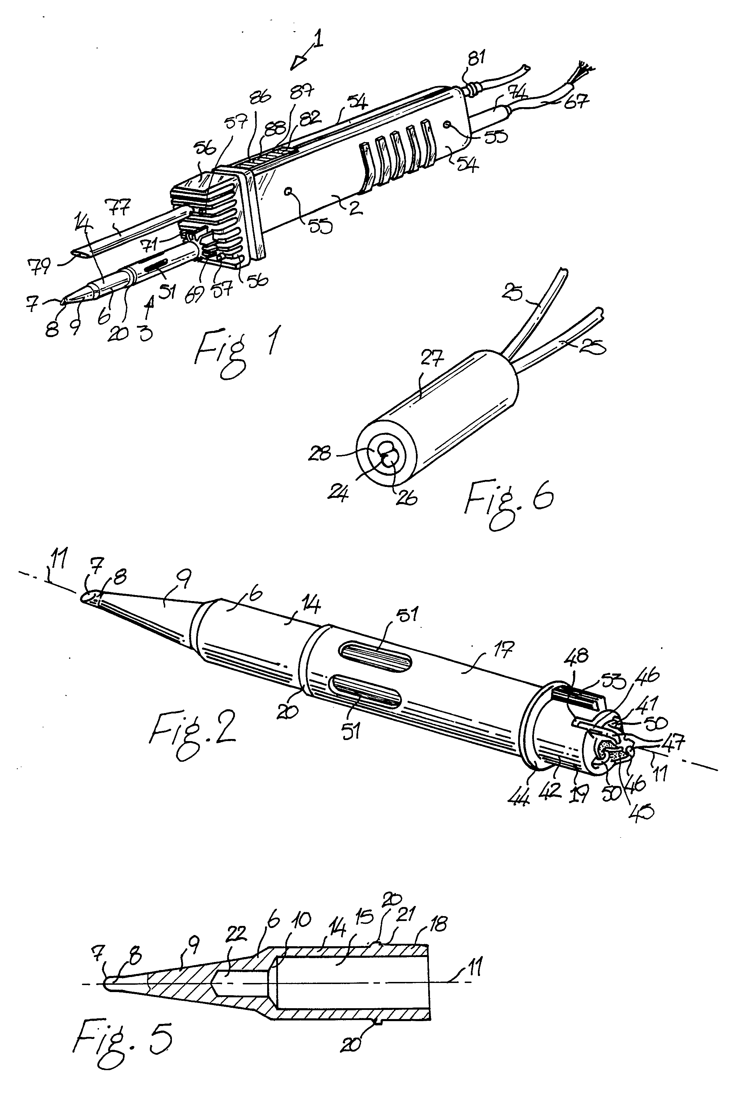

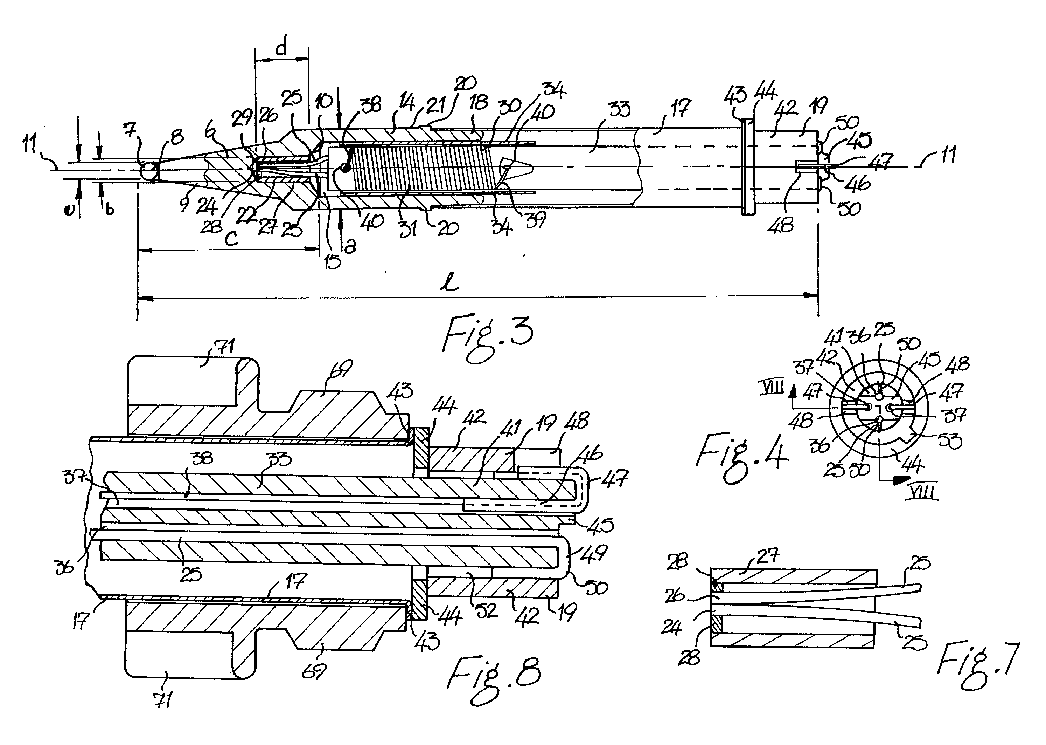

Referring in particular to Figs. 2 to 8 the soldering head 3 comprises an elongated main body member 6 of circular cross section and of heat conductive material, namely, copper which is iron plated and then nickel plated. The main body member 6 defines a central axis 11 and terminates in a front end 7 which forms a solder working tip portion 8 and a rear end 10. A portion 9 of the main body member 6 is of conical shape, and in practice constitutes portion of the solder working tip portion 8. In general, the solder working tip portion 8 would extend from the front end 7 along the conical portion 9 for a distance of approximately one-third the length of the conical portion 9. A hollow cylindrical housing 14 extends rearwardly and axially from the body member 2 and defines a hollow interior region 15 for accommodating a heating means as will be described below. A cylindrical tubular member 17 of stainless steel material is mounted on an end 18 of the cylindrical housing 14. The wall thickness of the tubular member 17 is 0.2 mm. The tubular member 17 extends rearwardly of the housing 14 and terminates in a quick release connecting means, in this case formed by a plug member 19, which will be described below, for engaging a complementary quick release connecting means in the handle 2. A ring 20 extending round the outer surface 21 of the cylindrical housing 14 acts as an abutment member to engage the tubular member 17 on the cylindrical housing 14. The tubular member 17 is secured to the cylindrical housing 14 by crimping. In this embodiment of the invention, the main body member 6, the cylindrical housing 14 and the ring 20 are formed by machining from a single blank of copper material.

Returning now to the main body member 6, a bore 22 of circular cross section extends axially along the axis 11 into the main body member 6 from the rear end 10 thereof for accommodating a temperature sensing means comprising a thermocouple 24 mounted within the main body member 6. The thermocouple 24 senses the temperature of the main body member 6, and in turn the temperature of the solder working tip portion 8. The thermocouple 24 comprises a pair of thermocouple wires 25 which are welded together to form a thermocouple joint 26. A cylindrical sleeve 27 of copper extends round the thermocouple 24 and the thermocouple joint 26 is braised to the sleeve 27 by braising 28. The sleeve 27 is of length so that when the sleeve 27 is fully inserted in the bore 22 the thermocouple joint 26 is adjacent the inner end 29 of the bore 22. The outer diameter of the sleeve 27 is such as to form a tight press fit of the sleeve 27 in the bore 22 for heat conduction from the body member 6 into the sleeve 27 and in turn through the braising at 28 into the thermocouple joint 26. This thus ensures that the temperature sensed by the thermocouple joint 26 is almost identical to the temperature of the soldering working tip portion 8. In fact, by virtue of the fact that the thermocouple joint 26 is inserted deep into the body member 6 in the bore 22, the temperature sensed by the joint 26 is substantially the temperature of the tip 8. A further advantage of inserting the thermocouple joint 26 deep in the bore 22 is that the thermocouple 24 is substantially shielded from radiant heat generated from the heating means. Thus, the effect of any radiated heat from the heating means on the thermocouple joint 26 is minimised, and a relatively true measure of the temperature of the tip 8 is obtained by the thermocouple 24.

In this embodiment of the invention, the outer diameter $a$ of the body member is 7.4 mm while the outer diameter $b$ of the tip 8 is 1.6 mm and the length $c$ of the body member 6 from the front end 7 to the rear end 10 is 16 mm and the depth $d$ of the bore 22 is 5 mm. The diameter $e$ of the bore is 2.3 mm.

The heating means comprises an electrically powered heating element 30 mounted in the interior region 15 of the housing 14. The heating element 30 comprises an element wire 31 coiled around a core member 33 of circular cross section and of ceramics material. A shield 34 of electrical insulating material, namely, mica, extends round the heating element 30 to insulate the element wire 31 from the housing 14. The mica of the shield 34 is one-tenth of a millimetre thick and it is corrugated in a longitudinal direction to facilitate bending of the mica around the heating element. The outer diameter of the heating element 30 is just less than the diameter of the interior region 15 of the housing 14 and the heating element 30 with the shield 34 form a substantially snug fit in the interior region 15 to facilitate the transfer of heat from the heating element 30 into the housing 14 for conduction into the main body member 6. The core member 33 extends rearwardly of the housing 14 through the tubular member 17 and terminates in the plug member 19, as will be described below. A pair of bores 36 extend throughout the length of the core member 33 for carrying the respective wires 25 of the thermocouple 24 to the plug member 19. A pair of bores 37 extend through the core member 33 for carrying the ends 38 and 39 of the element wire 31 to the plug member 19. Openings 40 in the side of the core member 33 communicate with the bores 37 for accommodating the wires 38 and 39.

The plug member 19 is formed partly by an end 41 of the core member 33 and a sleeve 42 of injection moulded plastics material which extends round the end portion 41 and forms a tight fit on the end portion 41. The tubular member 17 terminates in a flange 43 and a collar 44 is welded to the flange 43. The sleeve 42 abuts the collar 44 and is bonded thereto. The sleeve 42 being a tight fit on the end portion 41 retains the core member 33 and heating element 30 in position in the interior portion 15 of the housing 14. A transverse portion 45 extends from the end portion 41 of the core member 33 and the bores 37 extend through the transverse portion 45. Electrically conductive contact members 46 of nickel and of U-shaped construction are inserted into the bores 37 to a depth of 10 mm to 15 mm to engage the ends 38 and 39 of the element wire 31 with electrically conductive engagement. The wires 38 and 39 are led through the bores 37 to the transverse portion 45 and the contact members are of diameter substantially similar to the diameter of the bores 37 so that when inserted in the bores 37 side by side with the respective wires 38 and 39 good electrical contact is made between the contact members 46 and the wires 38 and 39. An advantage of inserting the contact members 46 to extend along portion of the bores 37 is that they reduce the electrical resistance of the wires 38 and 39 along the bores 37. Portions 47 of the contact members 46 form electrical contacts 47 for engaging corresponding contacts described below in the handle 2 for delivering power to the element 30. Slots 48 are formed in the sleeve 42 to accommodate the contact members 46.

The thermocouple wires 45 extend through the bores 36 and are bent over at 49 and return along the outer side of the end portion 41 of the core member 33. The bent portion 49 of the wires 25 form electrical contacts 50 for engaging corresponding contacts described below in the handle 2 for connecting the thermocouple 24 to control circuitry described briefly below. Slots 52 in the inner bore of the sleeve 42 accommodate the ends of the thermocouple wires 25 extending along the outer surface of the end portion 41 of the core member 33.

A key 53 extends longitudinally of the sleeve 42 for engaging a corresponding keyway, described below, in the handle 2.

Six slots 51 of 10 mm long and 2 mm wide are provided equi-spaced circumferentially around the tubular member 17 to reduce the amount of heat conducted through the tubular member 17 towards the plug member 19.

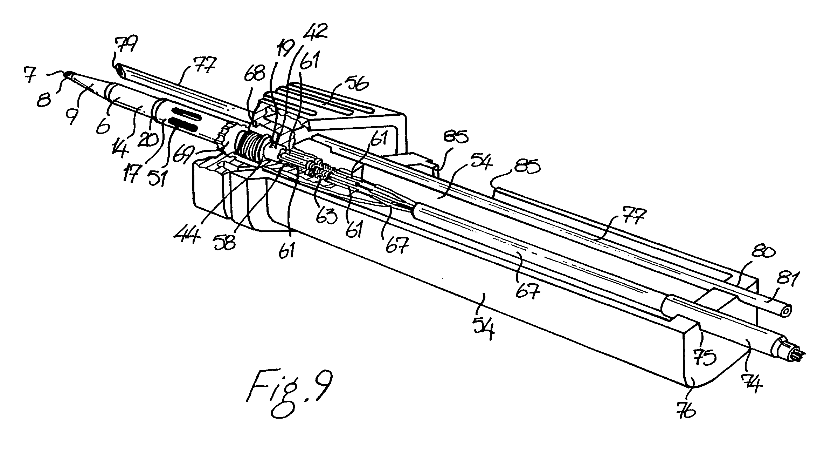

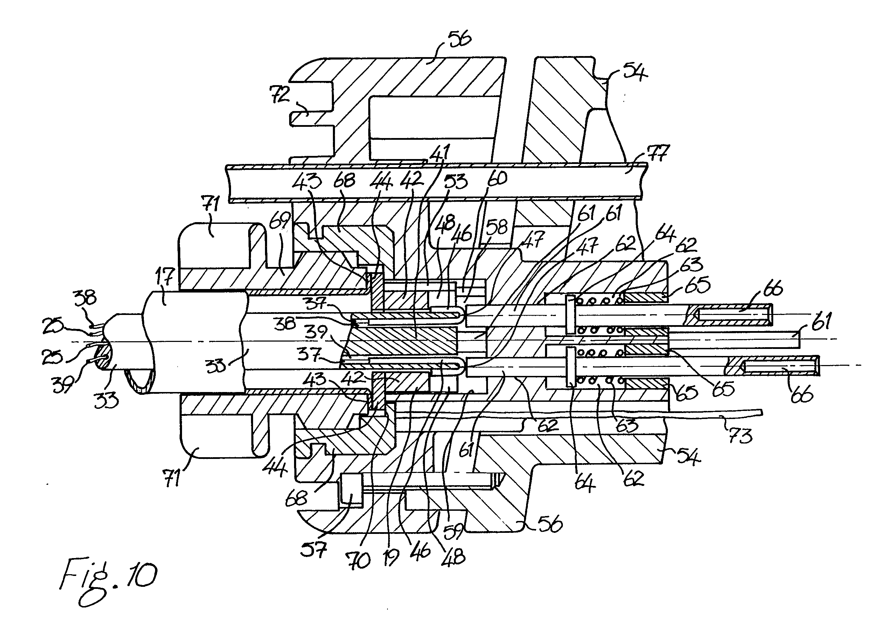

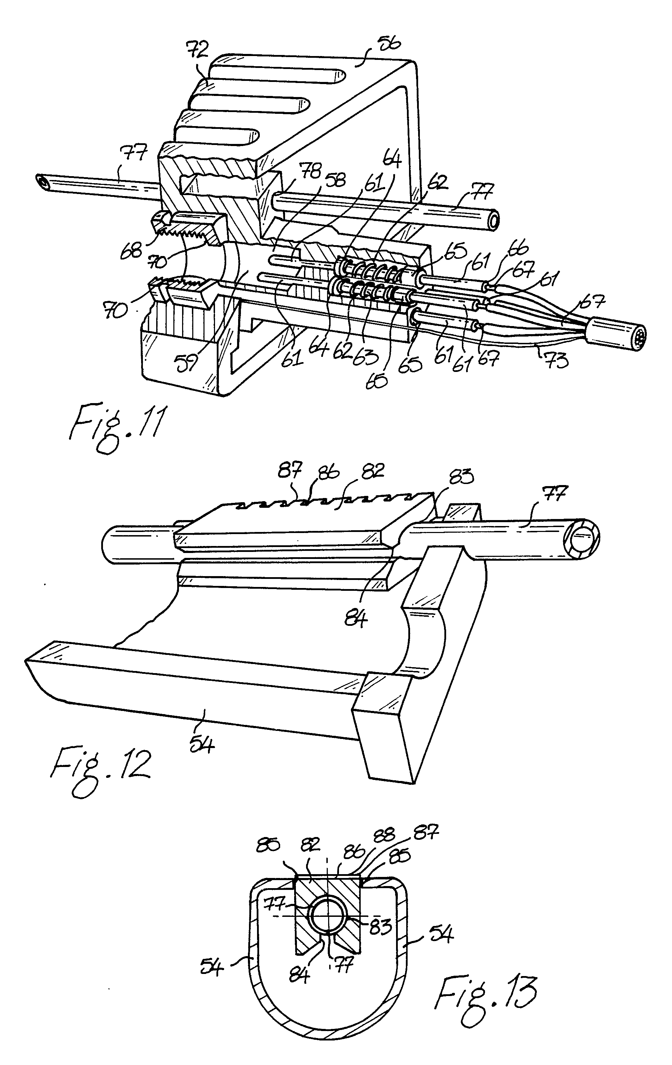

Returning now to the handle 2 and referring in particular to Figs. 9 to 13, the handle 2 comprises a pair of hollow shells 54 of injection moulded plastics material secured together by screws 55. A socket member 56 of injection moulded plastics material is mounted to the shells 54 by screws 57. The socket member 56 comprises a complementary quick release connecting means provided by a socket 58 for engaging the plug member 19 of the soldering head 3. The socket 58 is formed by a bore 59 extending into the socket member 56. The diameter of the bore is substantially similar to the outer diameter of the sleeve 42, so that the sleeve 42 tightly engages the bore 59. A keyway 60 in the bore 59 engages the key 53 for aligning the plug member 19 in the socket 58. Four contact members comprising contact pins 61 are slidable in respective bores 62 communicating with the bore 59, and the pins 61 extend into the bore 59 for engaging the respective corresponding electrical contacts 47 and 50 in the plug member 19. Compression springs 63 acting between collars 64 on the pins 61 and collars 65 pressed into the bores 62 urge the pins 61 into the bore 59 for providing good electrical contact between the pins 61 and the respective contacts 47 and 50. Bores 66 extending into the pins 61 receive cables 67 which are secured in the bores 66 by crimping the pins 61 around the cables 67.

A threaded insert 68 of steel is integrally moulded into the socket member 56 and is axially aligned with the bore 59. A nut 69 around the tubular member 17 engages the threaded insert 68 for securing the plug member 19 into the socket 58. The flange 43 and collar 44 are retained in the threaded insert 68 between the nut 69 and a shoulder 70 in the threaded insert 68. Fins 71 formed on the nut 69 and fins 72 formed on the socket member 56 conduct heat which may travel through the tubular member 17. An earth strap 73 extends through the socket member 56 and is electrically connected to the threaded insert 68 for earthing the threaded insert 68 and the soldering head 3.

The cable 67 extends through the shells 54 and through a grommet 74 in a cable inlet 75 at an end 76 of the shells 54 for connecting the soldering iron to suitable control apparatus (not shown). The control apparatus comprises suitable control circuitry for controlling delivery of electrical power to the heating element 30. The control circuitry comprises a circuit for comparing the temperature monitored by the thermocouple joint 26 with predetermined upper and lower limits and for controlling delivery of power to the heating element in response to the monitored temperature. The circuitry may also be provided with an input means for selection of the upper and lower temperature limits. It is also envisaged that the control apparatus may house a transformer for stepping down the voltage delivered to the heating element to, for example, 24 volts.

A fume extraction tube 77 extends through the shells 54 and through a bore 78 in the socket member 56 to terminate in an opening 79 adjacent the solder working tip 8 for extracting solder fumes in the region of the tip 8. The tube 77 extends through an opening 80 formed at the end 76 of the shells 54. An end 81 of the tube 77 is adapted to receive a tube from a vacuum pump (not shown) for applying a vacuum to the tube 77. The vacuum tube 77 is retained in the handle 2 by a clamping member 82 of a resilient plastics material, see Figs. 12 and 13. A bore 83 extending through the clamping member 82 receives the tube 77 with a friction fit action for enabling the position of the tube 77 and in particular the opening 79 to be varied. The tube 77 is slidable longitudinally in the bore 83 for accommodating different lengths of soldering heads. The tube 77 is also rotatable in the bore 83. Further, the tube 77 may be removed and replaced by sliding through the bore 83 without the need for dismantling the handle 2. An access slot 84 extending longitudinally of the bore 83 facilitates entry of the tube 77 in the bore 83. Recesses 85 in the shells 54 engage and retain the clamping member 82 in position. Grooves 86 and ridges 87 are provided on a surface 88 of the clamping member 82 for acting as a thumb grip.

In practice, it is envisaged that each soldering iron 1 will be provided with a plurality of soldering heads 3, each having a tip 8 of different size and shape to facilitate soldering of different types of components. Such different shapes and sizes of tips will be readily known to those skilled in the art. Indeed, it is also envisaged that soldering heads of different heat output, in other words, comprising heating elements 30 of different power ratings, will also be provided, as will a number of spare soldering heads 3.

In use, an appropriate sized soldering head 3 to suit the soldering operation to be undertaken is secured in the handle 2. The plug member 19 of the selected soldering head 3 is engaged in the socket 58 of the handle 2 with the key 53 engaging the keyway 60, and is pressed tightly into the socket 58 so that the contacts 47 and 50 make good electrical contact with the contact pins 61. The nut 69 is then tightened in the insert 68 to ensure that the plug member 19 is tightly secured in the socket 58. The control apparatus (not shown) is set to the desired temperature and the main body member 6 and tip 8 are heated. On the thermocouple 24 sensing the main body member 6 having reached the desired temperature, the power is switched off to the heating element 30, which remains off until the temperature drops below the selected temperature, at which stage the power is again delivered to the heating element 30.

The advantages of the invention are many. A particularly important advantage of the invention is that the temperature of the main body member and in turn the tip portion 8 can be controlled within relatively tight limits, and furthermore, the temperature sensed by the thermocouple 24 is substantially identical to the temperature of the tip 8. This is achieved by virtue of the fact that the temperature sensing means, which in this case is a thermocouple 24, is mounted well within the body member 6, namely well within the bore 22 extending into the body member 26. In this way, as can be seen, the thermocouple by being inserted well within the body member 6, is very close to the actual solder working tip portion 8. Since the main body member 6 is of copper and thus a good heat conductive material, the temperature gradient between the tip 8 and the inner end of the bore 22 is relatively low. Furthermore, by virtue of the fact that the thermocouple joint 26 is braised to the sleeve 27 and the sleeve is a tight press fit into the bore 22 a heat conductive path with virtually no losses is provided from the tip 8 to the thermocouple joint 26. The braising material is, of course, also a good heat conductive material, in this case the braising material is brass.

A further advantage of providing the thermocouple well within the body member 6 is that it is removed from the influence of radiated heat which is radiated from the heating element 30. Thus, the temperature reading monitored by the thermocouple joint is, in general, an accurate reading of the temperature of the body member 6 and in turn the tip 8.

A further advantage of the invention is achieved by virtue of the construction of the soldering head, in that the heating element 30 is mounted within the housing 14 which extends from and is integrally formed with the body member 6. By virtue of this construction, virtually all the heat generated by the heating element 30 is radiated and conducted into the body member 6 and housing 14 and is thus conducted to the tip 8. Indeed, the only heat lost from the heating element 30 is by convection from the outer surface of the housing 14, which, in general is relatively low and by conduction through and convection from the tubular member 17. However, since the tubular member is of a relatively thin material, the quantity of heat conducted along the tubular member 17 is relatively low. Furthermore, the provision of the slots 51 in the tubular member 17 further reduces the quantity of heat conducted through the tubular member 17 into the handle 2.

A further advantage of the invention is achieved by virtue of the construction of the soldering head, in that the construction provides for a relatively short soldering head from plug member 19 to tip 8. This, it has been found, leads to a more versatile and easily used soldering iron, since the actual solder working tip portion 8 is nearer to the handle, and in turn nearer to the hand of the operator. In this embodiment of the invention, the length _1_ of the soldering head 3 is 64 mm.

A further and important advantage of the invention is that by virtue of the fact that the temperature is monitored by the thermocouple within the main body member 2, the temperature sensing is particularly sensitive, and accordingly the heating element is quickly responsive to any fall or rise in temperature in the body member. This has the advantage that the temperature of the solder working tip portion 8 can maintain at a relatively constant temperature without the need to have a body member comprising a relatively large mass of metal to avoid temperature fluctuations, as has, in general, been required in soldering irons known heretofore. This thus permits a soldering head with a relatively lightweight body member and solder working tip portion to be provided, thus further enhancing the versatility and ease of using the soldering iron.

A further advantage of the invention is achieved by virtue of the fact that the soldering head 6 is readily easily connected and disconnected from the handle. Thus, in the event of an operator wishing to change the head, for example, for a head of a different size or of different heat output, or alternatively to replace the head in the event of failure of the soldering tip portion 6 or the heating element 30, all that is required is to unscrew the nut 69, withdraw the plug member 19 from the socket 58 and replace the soldering head with a new or different soldering head. In fact, a further advantage of the invention is achieved by the construction of the soldering head, in that should a heating element 30 fail or a solder working tip portion 8 wear out, the entire soldering head may be disposed of and replaced by a fresh soldering head. This reduces the amount of maintenance required on the iron to a minimum and avoids the need for a skilled electrician to repair or replace the heating element, since an operator of the soldering iron would, in general, be quite capable of merely replacing the existing soldering head with a fresh soldering head by the procedure just described.

While the soldering head has been described and illustrated as comprising a body member and a solder working tip portion 8 of a particular shape and construction, different shapes of tip portions may be provided. While the body member has been described as being of copper material plated with iron and nickel, the main body member may be of any other suitable heat conductive material and it will of course be appreciated that the solder working tip portion 8 may be of a different material to the main body member 6, as indeed may the housing 14.

Further, while the thermocouple has been mounted in a bore in the body member 6, the thermocouple may be mounted by any other means in the body member 6, provided it is well inserted or embedded in the main body member. Additionally, it is envisaged that instead of braising the thermocouple joint 26 to the sleeve 27, the joint 26 may be crimped onto the sleeve 27, or the thermocouple joint may be mounted in the sleeve by a suitable heat conductive paste. Further, it is envisaged in certain cases that the sleeve may be dispensed with altogether, and in which case the thermocouple joint 26 would be arranged to be a tight fit adjacent the inner end of the bore in the main body member. Further, it is envisaged that the thermocouple joint 26 may be braised onto or otherwise secured to a disc, which would form a tight fit and be inserted into the inner end of the bore 22.

While the temperature sensing means has been described as comprising a thermocouple joint, any other suitable temperature sensing means may be used, for example a resistance temperature measuring means or any other suitable temperature measuring means may be used without departing from the scope of the invention. However, it is important that whatever type of temperature sensing means is used should be mounted well within the body member 6.

It will be appreciated that while the heating means has been described as being an electrically powered heating element, any other suitable heating means may be used, for example a gas powered heating means or the like. Indeed, where an electric powered heating means is provided, any other suitable electric powered heating means besides a heating element wire wound in a coil around a core member may be used. Indeed, in certain cases, it is envisaged that where a heating element wire coil is used, the wire coil may be wound round portion of the body member.

It will of course be appreciated that other construction of mounting means for mounting the body member to the plug member may be used, and indeed, in certain cases it is envisaged that the plug member may be dispensed with altogether, and the soldering head would be hard mounted into the handle.

While a particular shape and construction of handle has been provided, any other shape and construction may be used without departing from the scope of the invention.

Furthermore, it will be appreciated that while a particular shape and construction of quick release connecting means have been described for connecting the soldering head into the handle, other suitable quick release connecting means may be used if desired. Of course, it will be appreciated that where a plug/socket arrangement is provided, the plug may be provided on the handle and the socket in the soldering head. Indeed, in certain cases, it is envisaged that the nut 69 may be dispensed with.

While the soldering iron and soldering head have been described and illustrated for use as a soldering iron, it is envisaged in certain cases that the soldering head may be used for desoldering without departing from the scope of the invention. In which case, it is envisaged that a suitable bore or bores will be provided through the main body member from the solder working tip portion 8 for removing solder from a joint being desoldered. Needless to say, in such a desoldering head, the solder working tip portion would be appropriately shaped.

While the soldering head and the main body member of the soldering head have been described as being of specific dimensions, it will be readily apparent to those skilled in the art that soldering heads and main body members of other dimensions may be used without departing from the scope of the invention. However, it is recommended that the depth $d$ of the bore should not be less than 25% of the length $c$ of the main body member from the front end 7 to the rear end 10, and preferably, the ratio of the depth $d$ to the length $c$ should not be less than one-third. However, where the solder working tip portion is formed by an elongated member of relatively small cross sectional area extending from the main body member, the length of the elongated member may be relatively long relative to the remainder of the main body member. In which case, the ratio of the depth $d$ to the length $c$ would be considerably less than one-third and indeed, less than one-quarter. However, in such cases, it is important that the bore should extend into the main body member to a position as close as possible within reason to the position from which the elongated member forming the solder working tip portion extends from the main body member.

Additionally, it is envisaged in certain cases that the main body member may be mounted to be readily easily detachable from the heating element and/or from the tubular member or any other support of the heating element.

It is also envisaged that the soldering head may alternatively be earthed through one of the wires of the thermocouple wires.

## Claims

1. A soldering head for a soldering or desoldering iron, the soldering head (3) being of the type comprising a main body member (6) of heat conductive material having a front end (7) and a rear end (10), the front end (7) forming a solder working tip portion (8), characterised in that a temperature sensing means (24) is mounted within the main body member (6).

2. A soldering head as claimed in Claim 1 characterized in that the temperature sensing means (24) is located in a bore (22) extending into the main body member (6).

3. A soldering head as claimed in Claim 2 characterised in that the main body member (6) is an elongated body member (6) extending between the front end (7) and the rear end (10), and defining a central axis (11), the bore (22) extending into the body member (6) from the rear end (10) along the central axis (11), and the temperature sensing means (24) being a tight fit in the bore (22) for heat conduction from the body member (6) to the temperature sensing means (24).

4. A soldering head as claimed in Claim 2 or 3 characterised in that the temperature sensing means (24) comprises a thermocouple (24) formed by a pair of wires (25) joined to form a thermocouple joint (26), the thermocouple joint (26) being disposed adjacent the inner end (29) of the bore (22).

5. A soldering head as claimed in Claim 4 characterised in that a sleeve (27) of heat conductive material is provided around the thermocouple (24), the thermocouple joint (26) being braised (28) to the sleeve (27) and the sleeve (27) being a tight fit in the bore (22) of the body member (6).

6. A soldering head as claimed in any of Claims 3 to 6 characterised in that an elongated hollow housing (14) extends from the main body member (6), the housing defining an interior region (15) and heating means (30) are mounted in the interior region (15) of the housing (14).

7. A soldering head as claimed in Claim 6 characterised in that the hollow housing (14) extends axially rearwardly from the main body member (6).

8. A soldering head as claimed in Claim 6 or 7 characterised in that the heating means (30) comprises an electrically powered heating element (30) wound on a core member (33) mounted in the housing (14), the cross sectional area of the heating element (30) being just less than the cross sectional area of the interior region (15) of the housing (14).

9. A soldering head as claimed in any preceding claim characterised in that an elongated tubular member (17) extends rearwardly from the housing (14) for connecting the soldering head (3) to a handle (2) of a soldering or desoldering iron (1), the tubular member (17) terminating in a quick release connecting means (19) for engaging a complementary quick release connecting means (58) in the handle, the quick release connecting means (19) carrying electrical contacts (47,50) for engaging corresponding electrical contacts (61) in the complementary quick release connecting means (58).

10. A soldering or desoldering iron comprising a handle (2) and a soldering head (3) connected to the handle (2), characterised in that the soldering head (3) is a soldering head (3) according to Claim 9, and the handle (2) is provided with a complementary quick release connecting means (58) for engaging the quick release connecting means (19) of the soldering head (3).

Fig. 1

Fig. 6

Fig. 2

Fig. 5

Fig.3

Fig.4

Fig.7

Fig.8

Fig. 9

Fig. 10

EP 0 386 948 A1

Fig.11

Fig.12

Fig.13

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-2717952 (WESTERN ELECTRIC COMPANY, INCORPORATED) <br> * column 2, lines 6 - 48 * | 1-3, 6-10 | B23K3/03 |
| A | * column 3, line 67 - column 5, line 10; figures 1-8 * | 4, 5 | |
| X | FR-A-930351 (COMPAGNIE FRANÇAISE THOMSON-HOUSTON) <br> * page 1, lines 24 - 45; figure 1 * | 1-4 | |
| A | | 5 | |
| X | GB-A-1289816 (COLIN PETER ADAMSON) <br> * the whole document * | 1-3, 6-8 | |
| A | | 4, 5 | |
| | | | **TECHNICAL FIELDS SEARCHED (Int. Cl.5 )** |
| | | | B23K |

The present search report has been drawn up for all claims

| Place of search | Date of completion of the search | Examiner |
|---|---|---|
| THE HAGUE | 15 JUNE 1990 | ARAN D. D. |